# EUROPÄISCHE PATENTSCHRIFT

(11) **EP 2 410 703 B1**
(45) Veröffentlichungstag und Bekanntmachung des Hinweises auf die Patenterteilung: **23.01.2019**
(21) Anmeldenummer: 11174527.9
(22) Anmeldetag: 19.07.2011
(51) Int. Cl.: H04L 12/58

(54) **Verfahren und Vorrichtung zur Anzeige erhaltener Nachrichten**
Method and device for displaying received messages
Procédé et dispositif permettant d'afficher les messages reçus

(30) Priorität: 21.07.2010 DE 102010031901
(43) Veröffentlichungstag der Anmeldung: 25.01.2012
(73) Patentinhaber: Deutsche Telekom AG, 53113 Bonn (DE)
(72) Erfinder: Schulz Sebastian, 50825 Köln (DE)
(74) Vertreter: Braun-Dullaeus, Karl-Ulrich

(56) Entgegenhaltungen:
- EP-A1- 2 091 217
- US-A1- 2006 224 944
- US-A1- 2008 171 535

## Beschreibung

Die Erfindung betrifft ein Verfahren zur Anzeige ("Notifikation") von über ein Kommunikationsnetz, insbesondere über ein Mobilfunknetz, erhaltenen Nachrichten auf dem Bildschirm, insbesondere dem Touch Screen Bildschirm, eines Endgerätes, wobei das Endgerät vor der Präsentation einer Nachricht einen Ruhebildschirm ("Idle-Screen") zeigt, über den zumindest eine Funktion abrufbar ist. Die Erfindung betrifft zudem ein Endgerät, insbesondere ein Mobiltelefon, zur Umsetzung des Verfahrens.

Bekanntermaßen werden Nutzer von Mobiltelefonen über den Eingang von Nachrichten gleich welcher Art durch eine Anzeige informiert Wenn sich das Mobiltelefon gerade im Idle Screen Modus befindet, in dem beispielsweise Funktionsicons gezeigt werden oder der abgedunkelt ist, und eine SMS eingeht, wird der Nutzer über den Eingang durch ein Klingelzeichen und/oder das Aufscheinen eines Symbols benachrichtigt, Bei manchen Geräten verändert sich das Funktionsicon, indem es beispielsweise einen grafischen Zusatz erhält. Wenn der Nutzer gerade in der Funktion der Nachrichtenverwaltung befindet, bekommt er die Nachricht auch unmittelbar durch eine angezeigte Kopfinformation angezeigt. Es gibt auch Geräte, bei denen eine kurze Notifikation erscheint, die kurz im Display stehen bleibt, bevor sie wieder verschwindet. Anschließend verbleibt nur eine Erinnerung in Form eines kleinen Symbols an dem entsprechenden Ordner, die anzeigt, dass dort noch eine neue Nachricht wartet.

Um eine solche eingegangene Nachricht dann abzurufen, bedarf es einiger Tastendrücke, insbesondere auch der Aufhebung einer eventuell eingeschalteten Tastensperre. Insofern ist die Handhabung solcher Nachrichten, die unter Umständen für den empfangenden Nutzer eine gewisse Wichtigkeit haben, nicht sehr komfortabel. Insbesondere kann es sein, dass er eine wichtige Nachricht von einer bestimmten Person erwartet, dann der Eingang einer Nachricht angezeigt wird, er umständlich zur Abfrage der Nachricht navigiert, um dann fest zu stellen, dass er statt der erwarteten Nachricht doch nur Spam bekommen hat.

Die US 2006/0224944 A1 offenbart ein Mobilterminal zum effektiven Anzeigen von Eventindikationen mittels einer Pop-Up- Box.

Die EP 2 091 217 A1 offenbart einen Nachrichtenfilter für eine Kommunikationseinrichtung. Eine Nachrichtenfilteranwendung ist vorgesehen, die einen Vergleich durchführt zwischen Absenderdaten der empfangenen Nachricht und freigegeben hinterlegten Absenderdaten.

Die US 2008/017535 A1 offenbart ein Verfahren zum Bereitstellen einer Voransicht von Nachrichten auf einer mobilen Kommunikationseinrichtung. Der Nutzer kann mit einem Rädchen die Position eines Auswahlfeldes auf dem Monitor steuern und damit eine spezielle Nachricht auswählen. Der Inhalt der ausgewählten Nachricht wird dann in einem pop-up Fenster dargestellt.

Aufgabe der Erfindung ist es nunmehr, eine komfortabel zu bedienende und damit attraktive Funktionalität zu schaffen, die einem Nutzer unter gewissen Umständen eine empfangene Nachricht auf eine Art anzeigt, die den Abruf komfortabel macht. Gleichzeitig sollte die Funktionalität den Nutzer vor dem Abruf von für ihn im Moment weniger wichtigen Nachrichten abhalten. Zudem ist es die Aufgabe, ein Endgerät zur Umsetzung des Verfahrens zu schaffen.

Gelöst werden diese Aufgaben durch das Verfahren nach Anspruch 1 und durch das Endgerät nach Anspruch 7. Die Unteransprüche beschreiben jeweils vorteilhafte Ausführungsformen.

Wie sich aus den Ansprüchen ergibt, liegt der Grundgedanke der Erfindung darin, Nachrichten bestimmter priorisierter Absender, auf eine besonders "nachdrückliche" und auffällige Weise zu präsentieren, die eine sofortige Wahrnehmung und eventuell eine unmittelbare Bearbeitung ermöglicht. Zu diesem Zweck wird der Absender der Nachricht zunächst insbesondere anhand seiner eingehenden CLI ("Calling Line Identity") insbesondere anhand seiner Rufnummer identifiziert und einer von mindestens zwei Kategorien zugeordnet. Wenn der Absender einer priorisierten VIP-Kategorie angehört, wird zumindest ein Teil des Inhalts der Nachricht automatisch nach dem Empfang in einem auf dem Bildschirm eingeblendeten "pop-up"-Fenster dargestellt. Als Teile der Nachricht eignen sich natürlich diejenigen, die eine ausreichende Aussagekraft besitzen. Eine solche "VIP-Notifikation" verbleibt dann auf dem Bildschirm, wobei vorteilhafterweise die sofortige Weiterbearbeitung, beispielsweise ein Lesen der kompletten Nachricht in einem Scroll-Fenster, insbesondere auch nach unmittelbarer Aufhebung der Tastensperre, ermöglicht wird.

Erfindungsgemäß hat somit das Endgerät, insbesondere das mit Touch Screen ausgestattete Mobiltelefon, eine Funktionalität zur unmittelbaren Darstellung derjenigen eingehenden Nachrichten, deren Absender einer höheren Priorität zuordnet sind, so dass bei Eingang nur die Nachrichten von priorisierten VIP-Absendern dargestellt werden. Vorteilhafterweise unterstützt der Touch Screen Bildschirm dabei eine Gestensteuerung, so dass das unmittelbare Scrollen oder Verschieben der soeben aufgepoppten Nachricht erfolgen kann.

Dabei können als Absender der priorisierten Nachrichten bestimmte Personen oder aber auch ausgesuchte online-Dienste, wie beispielsweise eine "blogging" Plattform, wie "Twitter", oder eine Kontaktplattform, wie "XING" oder "Facebook", ausgesucht sein. Geht von einem solchen Absender eine Nachricht oder Mitteilung ein, wird diese erfindungsgemäß dargestellt Vorteilhafterweise wird zumindest ein aussagekräftiger Textabschnitt, umfassend beispielsweise den Namen des Absenders und eine Betreffzeile, als Teil des Inhalts der auf das Endgerät gepushten Nachricht unmittelbar nach dem Empfang in dem pop-up-Fenster dargestellt Es können aber auch andere Inhalte, wie Tondokumente, Bilder oder Videos in dem "pop-up" Fenster dargestellt werden.

Die Erfindung lässt es natürlich auch zu, dass mehr als nur zwei Kategorien vorgesehen werden, wobei je nach dem Grad der Priorisierung eine entsprechend bevorzugte oder komfortable Darstellung ausgewählt wird.

Wenn allerdings eine Nachricht von einem "normalen", nicht prioriserten Absender, also einem Absender einer untergeordneten Kategorie, eingeht, wird diese wie gewohnt behandelt, insbesondere indem lediglich der Empfang der Nachricht vom Endgerät signalisiert wird.

Besonders vorteilhaft ist es, wenn bei Erhalt einer "VIP-Notifikation" der um das pop-up-Fenster herum befindliche Ruhebildschirm verschleiert und/oder abgedunkelt wird oder im Falle des abgedunkelten Ruhebildschirmes abgedunkelt bleibt. Auf diese Weise springt die "VIP-Notifikation" den Empfänger optisch noch stärker an und wird entsprechend besser wahrgenommen. Letztendlich lässt sich die Nachricht aber auch besser lesen, wenn der Bildschirm rundherum eine gewisse optische Beruhigung erfährt. Für die Weiterbearbeitung ist es auch vorteilhaft, wenn bei Erhalt der Nachricht einige auf dem verbleibenden Ruhebildschirm dargestellte Funktionalitäten mit einer Tastensperre belegt werden. Dadurch wird vermieden, dass diese ungewollt aufgerufen werden. Durch eine solche plötzliche Tastensperre ist die Funktionalität mit dem Erreichen der Nachricht rein auf deren Wahrnehmung und Weiterbearbeitung fokussiert.

Zumindest eine für die Bearbeitung der Nachricht notwendige Funktionalität bleibt während der Darstellung des pop-up-Fensters aktiv wobei eine eventuell dafür eingerichtete Tastensperre aufgehoben wird. Wenn also eine Nachricht eingeht, kann das Abrufen der kompletten Inhalte, das Löschen oder Speichern der Nachricht, sowie das Beantworten der Nachricht aktiviert bleiben oder im Fall einer entsprechenden Tastensperre aktiviert werden. Insbesondere kann sich die im pop-up-Fenster dargestellte Nachricht über Gesten gesteuert werden, wobei sich der Inhalt der Nachricht über eine Geste scrollen und/oder wobei sich die Nachricht über eine Geste schließen und in einen Ordner für eingegangene Nachrichten verschieben lässt.

Ein besonderer Gesichtspunkt der Erfindung liegt in der Art, wie den Absendern ein Status zugeordnet wird, auf grund dessen sie als priorisiert gelten. Als einfache Möglichkeit bietet sich die manuelle Zuordnung bestimmter Absender zu der VIP Kategorie an. Dazu können die zu priorisieren Absender in einer Datei, insbesondere in der Adress- oder Telefonbuchfunktionalität, entsprechend mit ihrem Grad der Priorisierung durch Eingabe des Nutzers markiert werden.

Es ist in einer vorteilhaften Ausführungsform jedoch auch eine automatische Zuordnung möglich. Diese kann beispielsweise dadurch erfolgen, dass bestimmten Absendern automatisch auf der Grundlage vormaliger Verbindungsaktivitäten eine VIP Kategorie zugeordnet wird. Wenn der Nutzer beispielsweise schon einmal oder insbesondere mehrmals mit dem Absender der gerade eingegangenen Nachricht in Verbindung stand oder ihn als "Freund" in seiner Kontaktplattform führt, kann der CLI eine entsprechend hohe Priorisierung zugeordnet werden. Zudem besteht eine Möglichkeit, ein "Ranking" vorzunehmen, darin, ein Feedback auf eine kürzlich in einem Social Network hinterlassene Nachricht für ein Hochstufen einzusetzen. Außerden ist ein automatischer Abgleich mit der Adress- oder Telefonbuchfunktfonalität denkbar, wobei jeder Eintrag eine Priorisierung erfahren kann.

In einer besonderen Ausführungsform, erfolgt die automatische Zuordnung mittels einer Funktionalität ("VIP Notifikation Settings"), bei der sich bestimmte Kriterien manuell vorgeben lassen. Beispielsweise könnte die Zahl, die zeitliche Dichte, die Intensität oder die jeweilige Dauer der schon geschehenen Kontakte als Maß für die Höhe der Priosrisierung herhalten.

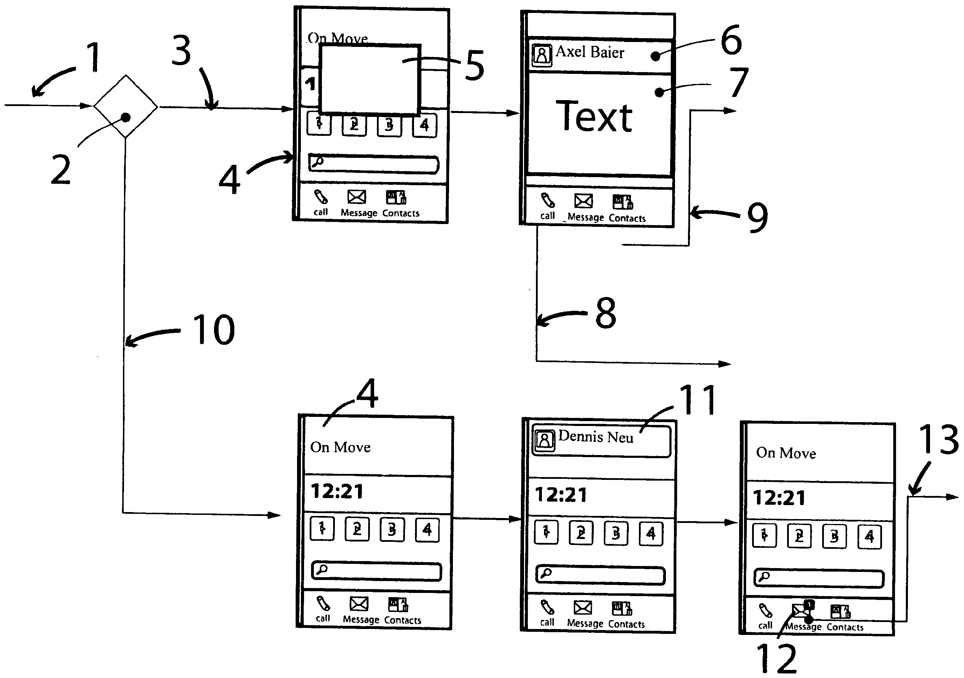

Weitere Merkmale und Vorteile ergeben sich aus der nachfolgenden Beschreibung anhand der Figur, die einen Funktionsablauf symbolisiert:
Die Figur zeigt den Eingang einer Nachricht mit dem Pfeil 1. In einer Abfrage 2 wird der Absender der Nachricht identifiziert und einer von mindestens zwei Kategorien zugeordnet. Im Falle einer empfangenen VIP Nachricht 3 dunkelt sich Toch Screen Bildschirm 4 des Endgerätes ab und es erscheint ein "pop-up"-Fenster 5. In diesem erscheint unmittelbar darauf die Daten 6 des priorisierten Absenders, hier von Axel Baier mit Bild. Zudem wird in dem Textfeld der komplette Text 7 der Nachricht unmittelbar angezeigt. Der Nutzer hat nun die Möglichkeit, die Nachricht beispielsweise zum Weiterleiten oder Speichern zu verschieben (Pfeil 8) oder sie nach Aufruf der momentan abgedunkelten Funktionstasten 9 über die Funktion "Menue" zu bearbeiten.

Im Fall des Eingangs einer nicht priorisierten Nachricht 10 verbleibt der Toch Screen Bildschirm 4 zunächst in seinem momentanen Status, bevor in einem oberen Abschnitt eine Kurznachricht mittels eines kleinen !nformationsfensters 11 angezeigt wird. Diese verschwindet dann recht bald wieder und es verbleibt nur die Kennzeichnung "1" am Icon "Messages" 12, welche das Vorliegen einer Nachricht anzeigt. Von hier aus kann die komplette Nachricht abgerufen werden (Pfeil 13).

## Patentansprüche

1. Verfahren zur Anzeige von über ein Kommunikationsnetz, insbesondere über ein Mobilfunknetz, erhaltenen Nachrichten auf dem Bildschirm (4), insbesondere dem Touch Screen Bildschirm, eines Endgerätes, wobei das Endgerät vor der Präsentation einer Nachricht einen Ruhebildschirm ("Idle-Screen") zeigt, über den zumindest eine Funktion abrufbar ist,
**dadurch gekennzeichnet,**
**dass** der Absender der Nachricht identifiziert und einer von mindestens zwei Kategorien zugeordnet wird,
**dass** zumindest ein Teil des Inhalts der Nachricht automatisch nach dem Empfang der Nachricht in einem auf dem Bildschirm eingeblendeten "pop-up"-Fenster (5) dargestellt wird, wenn der Absender einer priorisierten VIP-Kategorie angehört,
**dass** zumindest eine für die Bearbeitung der Nachricht notwendige Funktionalität während der Darstellung des pop-up-Fensters (5) aktiv bleibt, wobei eine eventuell dafür eingerichtete Tastensperre aufgehoben wird und
**dass** lediglich der Empfang der Nachricht vom Endgerät signalisiert wird, wenn der Absender einer nicht priorisierten Kategorie angehört.

2. Verfahren nach Anspruch 1,
**dadurch gekennzeichnet,**
**dass** unmittelbar nach dem Empfang der Nachricht zumindest ein aussagekräftiger Text (7) als Teil des Inhalts der auf das Endgerät gepushten Nachricht in dem pop-up-Fenster (7) dargestellt wird.

3. Verfahren nach Anspruch 1,
**dadurch gekennzeichnet,**
**dass** der um das pop-up-Fenster (5) herum befindliche Ruhebildschirm verschleiert und/oder abgedunkelt wird, wobei insbesondere einige auf dem verbleibenden Ruhebildschirm dargestellte Funktionalitäten mit einer Tastensperre belegt werden.

4. Verfahren nach einem der vorherigen Ansprüche,
**dadurch gekennzeichnet,**
**dass** sich die im pop-up-Fenster (5) dargestellte Nachricht (7) über Gesten steuern lässt, wobei sich der Inhalt der Nachricht über eine Geste scrollen und/oder wobei sich die Nachricht über eine Geste schließen und in einen Ordner für eingegangene Nachrichten verschieben lässt.

5. Verfahren nach einem der vorherigen Ansprüche,
**dadurch gekennzeichnet,**
**dass** bestimmten Absendern manuell die VIP Kategorie zugeordnet wird.

6. Verfahren nach einem der vorherigen Ansprüche,
**dadurch gekennzeichnet,**
**dass** bestimmten Absendern automatisch auf der Grundlage vormaliger Verbindungsaktivitäten die VIP Kategorie zugeordnet wird.

7. Endgerät, insbesondere Mobiltelefon, mit einem Bildschirm und Mitteln zur Ausführung aller Schritte eines Verfahrens nach einem der vorhergehenden Ansprüche.

8. Endgerät nach Anspruch 7,
**dadurch gekennzeichnet,**
**dass** der Bildschirm (4) ein Touch Screen Bildschirm ist, der eine Gestensteuerung unterstützt.

## Claims

1. Method of displaying messages received via a communications network, in particular a mobile telephone network, on the screen (4), in particular the touch screen, of a terminal device, wherein before presenting a message the terminal device shows an idle screen which can be accessed by way of the at least one function
**characterised in that**
the sender of the message is identified and assigned to one of at least two categories,
**in that** after receipt of the message, at least part of the content of the message is automatically, shown in a pop-up window (5) displayed on the screen if the sender belongs to a prioritised VIP category,
**in that** at least one function necessary for processing the message while the pop-up window is displayed remains active, wherein a keylock possibly set up for this is cancelled and
if the sender does not belong to a prioritised category only receipt of the message is signalled by the terminal device.

2. Method according to claim 1 **characterised in that** immediately after receipt of the message, at least one informative text (7) as part of the message pushed onto the terminal device is shown in the pop-up window (7) .

3. Method according to claim 1 **characterised in that** the idle screen surrounding the pop-up window (5) is hidden and/or darkened, wherein a keylock is applied to some the functions shown on the remaining idle screen.

4. Method according to any one of the preceding claims **characterised in that** the message (7) shown in the pop-up window (5) can be controlled by gestures, wherein the content of the message can be scrolled via a gesture and/or wherein the message can be closed by way of a gesture and moved to a folder for received messages.

5. Method according to any one of the preceding claims **characterised in that** certain senders are manually assigned to the VIP category.

6. Method according to any one of the previous claims **characterised in that** certain senders are automatically assigned to the VIP category on the basis of previous connection activities.

7. Terminal device, more particularly mobile telephone, with a screen and means of implementing all stages of a method according to any one of the preceding claims.

8. Terminal device according to claim 7 **characterised in that** the screen (4) is a touch screen which supports control by gestures.

## Revendications

1. Procédé, destiné à afficher des informations obtenues via un réseau de communication, notamment un réseau de téléphonie mobile sur l'écran (4), notamment l'écran tactile d'un terminal, avant la présentation d'une information, le terminal affichant un écran de veille (« Idle-Screen ») via lequel au moins une fonction peut être interrogée, **caractérisé**
**en ce que** l'expéditeur de l'information est identifié et affecté à l'une d'au moins deux catégories,
**en ce qu'**après la réception de l'information, au moins une partie du contenu de l'information est automatiquement représentée sur une fenêtre contextuelle (« pop-up ») (5) qui s'ouvre sur l'écran, si l'expéditeur fait partie d'une catégorie VIP prioritaire,
**en ce qu'**au moins une fonctionnalité nécessaire pour le traitement de l'information reste active pendant la présentation de la fenêtre contextuelle (5), un blocage de touches aménagé éventuellement à cet effet étant supprimé et
**en ce que** seule la réception de l'information est signalée par le terminal si l'expéditeur fait partie d'une catégorie non prioritaire.

2. Procédé selon la revendication 1, **caractérisé en ce que** directement après la réception de l'information, au moins un texte probant (7) est représenté sous la forme d'une partie du contenu de l'information poussée sur le terminal dans la fenêtre contextuelle (7).

3. Procédé selon la revendication 1, **caractérisé en ce que** l'écran de veille qui encadre la fenêtre contextuelle (5) se voile et/ou s'assombrit, notamment quelques fonctionnalités représentées sur l'écran de veille restant étant assorties d'un blocage de touches.

4. Procédé selon l'une quelconque des revendications précédentes, **caractérisé en ce que** l'information (7) représentée dans la fenêtre contextuelle (5) se commande par des gestes, le contenu de l'information pouvant défiler via un geste et/ou l'information pouvant se fermer et se déplacer dans un répertoire des informations reçues via un geste.

5. Procédé selon l'une quelconque des revendications précédentes, **caractérisé en ce que** la catégorie VIP est manuellement affectée à certains expéditeurs.

6. Procédé selon l'une quelconque des revendications précédentes, **caractérisé en ce que** sur la base d'activités de connexion précédentes, la catégorie VIP est affectée à certains expéditeurs.

7. Terminal, notamment téléphone mobile, pourvu d'un écran et de moyens destinés à réaliser toutes les étapes d'un procédé selon l'une quelconque des revendications précédentes.

8. Terminal selon la revendication 7, **caractérisé en ce que** l'écran (4) est un écran tactile qui assiste une commande par gestes.
